# EUROPEAN PATENT SPECIFICATION

(11) **EP 4 120 208 B1**
(45) Date of publication and mention of the grant of the patent: **29.10.2025**
(21) Application number: 22184497.0
(22) Date of filing: 12.07.2022
(51) Int. Cl.: G06F 40/30, G06V 30/413, G06V 30/416

(54) **METHOD FOR CLASSIFICATION OF DOCUMENTATION**
METHODE ZUR KLASSIFIZIERUNG VON DOKUMENTEN
MÉTHODE DE CLASSIFICATION DES DOCUMENTS

(30) Priority: 12.07.2021 IT 202100018317
(43) Date of publication of application: 18.01.2023
(73) Proprietor: BLU s.r.l., 31044 Montebelluna (TV) (IT)
(72) Inventor: Marcon, Alfio, Montebelluna (TV) (IT); Belardi, Giorgio, Montebelluna (TV) (IT)
(74) Representative: Bruni, Alessandro

(56) References cited:
- US-A1- 2019 384 972
- US-A1- 2021 064 866
- IOSR JOURNALS ET AL: "A novel semantic level text classification by combining NLP and Thesaurus concepts", 1 January 2014 (2014-01-01), pages 14 - 26, XP055907212, Retrieved from the Internet <URL:https://www.academia.edu/download/34511044/C016461426.pdf> [retrieved on 20220330], DOI: 10.6084/m9.figshare.1204896

## Description

The present invention relates to a computer implemented method for the analysis and classification of documentation, which allows users to analyze individual documents in a reliable, effective, fast, efficient, economical and easy-to-use way in order to facilitate their use in function of specific needs.

The present invention also relates to a system for selecting the documentation previously analyzed and classified by means of this method and to a computer program configured to carry out this method.

In the following of the present description and in the claims, the computer implemented method means a method that can be performed by any device equipped with one or more processing units, such as for example tablets, laptops, personal computers (PCs) and servers, provided with a monitor, keyboard and pointing device that can be used with the hands, such as a mouse, a tablet, a trackball, a touch pad, a touch screen, a trackpoint.

The presence in the market of systems based on NLU (natural language understanding) artificial intelligence techniques is known which, while allowing the interpretation of the general meaning of a text, or of a part of it, such as a section, a chapter, a paragraph, have as a limit the inability to contextualize the contents of the text itself.

Some methods of analyzing documents based on artificial intelligence techniques are described in documents US 10824854 B2 and WO 2021/045081A1.

Such systems do not allow to overcome the drawbacks of the prior art with reference to the method of analyzing the content of the document and the possibility of contextualizing its contents.

US 2019/0384972 A1 discloses a system and the related method to extract data from an image which has been acquired and converted to an OCR text wherein each line text is classified either a line item or not a line item using machine learning algorithm.

The purpose of the present invention, therefore, is to allow users to analyze and classify one or more documents in a reliable, effective, fast, efficient, economical and simple way to facilitate their subsequent selection and use by a user, on the basis of specific needs of use.

The subject of the invention is a computer implemented method for the analysis and classification of documentation using a computer, provided with a screen, keyboard and pointing device, including the following steps:
- encoding the digital content of the digital documentation with the aid of an OCR type technology;
- analyzing the codified documentation in order to identify and normalize discursive and numerical elements contained in it;
- analyzing the standardized elements of the documentation, wherein the analysis is based on a symbolic artificial intelligence system,
where during the analyzing phase, the method further includes:
- a phase of identifying, selecting and mutually contextualizing different contents of the digitized or digital documentation, distinguishing discursive parts and/or numerical parts, through models and IT functions,
- attributing to the different contents a programmable relational structure of "benchmark" elements,
- populating a database through the benchmark elements in which the value of the benchmark elements is also a function of a possible correlation between the normalized elements.

According to another aspect of the invention, symbolic artificial intelligence can be configured to simulate a human understanding of the text of the symbols and/or numbers included in the analyzed documentation.

According to a further aspect of the invention, the phase of attributing the benchmark elements may include the phases of:
- searching through thesaurus for correspondences in the analyzed documentation,
- isolating portions of the documentation that have not been classified;
- manually classifying the portions of the documentation that have not been classified;
- training the recognition of previously unclassified portions, so as to be able to recognize them in a subsequent analysis.

According to an additional aspect of the invention, the step of populating the database can comprise structuring the contents of the documentation on the basis of a hierarchical structure of the documentation with reference to paragraphs identified during the analysis of the documentation and linking the contents reciprocally to form the entire structure of the documentation analyzed.

According to another aspect of the invention, the computer implemented method can comprise a phase of teaching on the basis of machine learning techniques through which the understanding of discursive and/or numerical contents of the documentation to be analyzed and classified is increased and refined.

According to a further aspect of the invention, the teaching phase may include a phase of attributing to the benchmark elements a correlation such as to contextualize any connection between mutually connected parts of the digitized and analyzed documentation.

According to an additional aspect of the invention, the teaching step can be performed by at least one user who interacts with the computer via the keyboard and the pointing device, wherein the user is an expert domain user.

According to another aspect of the invention, the teaching step may comprise a step of verifying the presence of a standardized element of the documentation within the database and displaying a message through a display device operatively connected to the computer to request a user to it interacts with the computer to assign the location of the element within the database and to define its relationships with the benchmark elements with respect to elements included in the documentation database.

According to a further aspect of the invention, the step of teaching the machine comprises teaching the meaning and semantics of each unrecognized word and its possible synonyms or a set of words in such a way that during a subsequent analysis of further documentation said computer recognizes and autonomously completes the assignment of the structure of said benchmark elements, populating the database containing a library of classified and possibly mutually linked data.

According to an additional aspect of the invention, the computer implemented method can comprise a phase of cataloging the normalized elements that make up the documentation, wherein the cataloging phase takes place on the basis of the machine learning process through which the normalized and related elements are recognized. degrees of correlation of them, assigning respective benchmark elements.

According to another aspect of the invention, the computer implemented method can comprise populating the database with data structured in a relational way, wherein the database comprises a "genetic" type structure in which each single benchmark element that composes the digitized and analyzed documentation, is fragmented into small attributes that make up an object, wherein said attributes are then related to each other.

Furthermore, a specific object of the invention is a system for selecting documents analyzed and classified according to the computer implemented method for the analysis and classification of documents indicated above, wherein the selection system comprises one or more processing units, at least a screen, at least one keyboard, at least one pointing device and at least one database populated through the aforementioned computer implemented method, wherein the system is configured to provide specific documentation included in the database on the basis of inputs provided to the computer by the user through the keyboard and pointing device.

The advantages offered by the computer implemented method for the analysis and classification of documents according to the invention are evident.

The computer implemented method for the analysis and classification of documentation according to the invention, in fact, allows to analyze the content of a document in an organic and structured way, in order to classify the entire content of the document in an extremely effective way and generate a structured and searchable database for training/information purposes, wherein the relationships between various portions of the analyzed documentation are also available, to allow an effective contextualization of the contents of the documentation itself.

The term documentation or document means, by way of example but not limited to, a contract, a policy, a manual, a book or more generally a document containing chapters, paragraphs and sub-paragraphs, any notes or references such as to connect mutually various portions of the documentation itself.

The specific object of the present invention also forms a set of one or more computer programs comprising instructions which, when executed by one or more processing units, cause the one or more processing units to execute the method of analysis and classification of documentation implemented via a computer previously described.

The computer implemented method for the analysis and classification of documents allows in fact to analyze and map the contents of a document through the aid of IT tools such as a computer, a laptop or similar, optionally connected to a server, a storage support and the consultation of data.

More specifically, the computer implemented method for the analysis and classification of documents makes it possible to receive, in a uniform way, the information on how a document is structured, to process such information through at least one algorithm configured to be implemented through a computer or similar, which it allows to divide the document into sections, parts, clear and defined coherent items, to obtain a structure of the analyzed document.

Optionally, the computer implemented method for analysis and classification of documentation allows you to produce a report (for example a document in PDF format) of the steps of the analysis carried out such as to constitute a content census of the analyzed document.

The computer implemented method for the analysis and classification of documentation according to the invention, hereinafter referred to as the analysis and classification method for the sake of brevity, allows the analysis of documentation starting from a paper document or from a document in digital format.

It should be noted that the term documentation is intended to indicate, in a generic way, a document that includes at least one page, regardless of the content of that document (text, tables, formulas, images or a combination thereof).

If the document is in paper format, the method involves an initial phase of acquiring at least one digital image for each page that composes the document through an acquisition device, such as a scanner or a digital camera.

Through the acquisition device, therefore, it is possible to obtain a digital copy of the paper documentation to be analyzed.

The method of analysis and classification includes a phase of coding the digital content of the document with the aid of an OCR type technology.

Then, the digital text thus converted is analyzed to identify and normalize the discursive and numerical elements it contains.

This phase of analyzing to identify and normalize the discursive and numerical elements is performed through algorithms of the type that can be implemented through a computer, wherein these algorithms are configured to identify, distinguish and classify, where present, various portions of the text. By way of example but not limited to, these algorithms are configured to distinguish and classify the title of a chapter, heading of paragraphs, content of individual paragraphs, values associated with any keywords and, therefore, the location of such contents within the documentation previously coded (with reference, for example to the page, chapter or paragraph in which a given content is included or placed).

During this phase, in practice, the parts of the text composed of letters as well as those comprising numbers or mathematical symbols are identified and normalized.

The analysis and classification method then includes a phase of analysis of the digitized and normalized text, wherein this analysis is based on a symbolic artificial intelligence system, that is, configured to simulate human understanding of the text.

In particular, during this phase of analysis, the analysis and classification method identifies, selects, and finally contextualizes the different contents of the digitized text, i.e. the discursive parts (letters) and/or numerical parts, attributing to them, in a way autonomous a programmable relational structure of "benchmark" elements, i.e. keywords.

The phase of attributing these benchmark elements includes the following further phases or sub-phases, which act in the following sequence:
- searching through thesaurus for correspondences in the analyzed documentation;
- isolating portions of the documentation that have not been classified;
- manually classifying the portions of the documentation that have not been classified;
- training the system to recognize previously unclassified portions, so as to be able to recognize them in a subsequent analysis or implementation of the method according to the invention.

The term benchmark elements are intended to indicate programmable reference structures for any of the analyzed elements of the digitized document.

Through this attribution of benchmark elements it is possible to identify and evaluate the desired details of the contents of the document analyzed, using models and IT functions.

It should also be noted that the training given to the system allows it to recognize any conditions not declared or indicated as excluded in the document (a typical condition of a so-called "all risk" policy) in such a way as to contextualize them with the content of the document same.

Optionally, the method involves the use of a display device, such as a monitor or similar, through which the different contents of the analyzed text can be viewed, as better described below.

By way of example but not limited to, the documentation to be analyzed may include at least one page, in turn comprising various portions divided into chapters, sections and paragraphs, containing the elements to be evaluated.

Such elements to be evaluated, as mentioned, may include descriptive parts, as well as numerical values, dates, tables, symbols, references.

Following the analysis of the document, the analysis and classification method populates a database, in which all the found elements are stored.

According to a preferred embodiment of the invention, the database is a database server to which at least one computer through which the method according to the invention can be implemented is operationally connected. This database configuration allows you to scale it from a single computer to a corporate network or, again, allows remote access and use (for example, online through internet access).

In particular, in the database population phase, the elements found are structured on the basis of the hierarchical structure of the documentation, with reference to the paragraphs identified during the analysis of the documentation and linked together to form the entire structure of the analyzed documentation.

This phase of structuring the elements identified in the analyzed documentation takes place because the method generates its own index relative to the content of the analyzed documentation.

With reference, for example, to a contract or a policy or more generally to a document containing chapters, paragraphs and sub-paragraphs, the analysis included in the method that can be implemented using the analysis and classification computer according to the invention, allows to create a its own structured and digital index of the individual chapters, paragraphs, sub-paragraphs, and the like, included in the analyzed documentation.

This analysis phase allows you to normalize the document within the database, creating a database containing a library of classified data and possibly linked to each other to be subsequently processed through algorithms implemented through a computer or at least a processing unit.

The analysis and classification method includes a learning phase based on machine learning techniques through which the capabilities of the analysis and classification method are increased and refined to understand the discursive and/or numerical contents of the digitized documentation.

This cognitive increase in the analyzed data of the digitized documentation allows a better connection, if present, of the data with reference, in particular, to the possibility of determining any relevant and significant relationships between the contents of the analyzed documentation.

With reference to the above, therefore, the analysis and classification method includes a phase of teaching the machine learning system, wherein this phase of teaching is performed by at least one user who interacts with at least one computer through which the method of analysis and classification itself. During this phase of teaching the machine the meaning and semantics of each unrecognized word (and its possible synonyms) or a set of words are taught so that during a subsequent analysis of further documentation the computer recognizes and completes the assignment of the structure of the benchmark elements. In practice, during the teaching phase, the database containing the library of classified and possibly mutually linked data is populated.

In other words, the method provides a phase of teaching the machine learning system through which the system itself is instructed to recognize contexts, portions of text, portions including numbers and/or symbols that have not been mutually associated with each other through the initial procedure analysis of the documentation.

In particular, if during the teaching phase an element within the analyzed document is not detected in the previously populated database, for example a word, a phrase, a value, the method involves a phase of generating a message through a display device, monitor, through which a user can request to assign the location of this element within a corresponding structure and to define its relations with the benchmark elements.

The user can interact with the computer through which the method can be implemented, through a keyboard and a pointing system connected to it.

This phase of teaching can take place whenever new documentation is analyzed, including contents different from those of the documentation previously analyzed through the method of analysis and classification according to the invention.

Therefore, the learning phase can occur repeatedly during the execution of the analysis and classification method, based on the contents of the documentation to be analyzed and the population of the database generated by the analysis and classification method itself.

Furthermore, during the learning phase it is possible to teach the recognition of any so-called exclusion clauses, to allow them to be contextualized within the document and thus provide an objective assessment of the document itself.

As mentioned, the analysis and classification method populates the database with data structured in a relational way, in which this database provides a "genetic" type structure.

The expression "genetic" means that every single benchmark element that makes up the digitized documentation (text element, numerical value, table, etc.) and analyzed, is fragmented into small attributes that make up an object, such as the title of the document, any titles of paragraphs, headings, numerical values, which are then related to each other. This fragmentation takes place on the basis of a logic imparted by a user expert in the context, that is to say a "domain expert".

The analysis of the digitized documentation, performed using the method of analysis and classification according to the invention, allows to identify any existing correlations between the parts that make up a document, creating correlations that are updated in their respective benchmark elements. With reference to what has been described above, the identification of these correlations or their creation takes place on the basis of a logic given by an expert domain user.

In this way, compared to the methods of analysis and classification of the prior art, it is possible to analyze the documentation in its entirety in an organic and synergistic way and to classify it on the basis of any correlations present in the elements contained in this documentation.

By way of example but not limited to, it should be noted that if the document includes clauses (possibly also exclusion clauses), text links to previous or subsequent portions of the text, the analysis and classification method is able to attribute to these links specific benchmark elements.

In this way, therefore, compared to the prior art, the computer implemented method for the analysis and classification of documentation according to the invention allows the documentation itself to be analyzed and contextualized in an organic way, thus favoring an optimal classification of the individual contents of the " entire documentation and any relationships present between the elements of the documentation itself.

The computer implemented method for the analysis and classification of documentation according to the invention includes a phase of cataloging all the elements that make up the analyzed documentation, starting from the individual sections and all the parts that make up the document itself.

This cataloging can take place completely automatically, on the basis of a machine learning process which, recognizing the individual elements and the relative degrees of correlation, assigns the respective benchmark elements. It is understood that the aforementioned cataloging process can take place in a semi-automated or completely manual way, requiring in both cases the intervention of a user who, through a personal computer connected to a keyboard and a pointing system, can interact with the computer implemented method, with reference to the above in relation to a possible teaching phase of the machine learning system.

As mentioned, the subject of the invention is a system for the selection of documentation analyzed and classified according to the computer implemented method for the analysis and classification of documentation according to the invention.

This selection system comprises one or more processing units, at least one screen, at least one keyboard, at least one pointing device and at least one database populated by means of the computer implemented method for the analysis and classification of documentation described above, wherein said one or more processing units are configured to carry out the aforementioned method implemented by means of an analysis and classification computer.

This system allows a user of a computer to query the database and to have in a simple, practical and effective way structured information of the documentation most suited to the specific needs of the user.

This system allows, on the basis of the inputs entered by a user, to compare the benchmark elements present in the database, which in turn correspond to specific documentation from which they were extrapolated, and to select the documentation that corresponds or approaches more to the needs of the user.

Optionally, the system according to the invention includes at least one printing device operatively connected to the computer or laptop or more generally to the computer available to the user, through which to print a report relating to the comparative analysis indicated above.

The advantages deriving from the implementation of such a system concern:
- the ability to easily and immediately identify the documentation required by a user on the basis of the inputs indicated by them,
- the automatic execution of this identification process;
- the ability to divide the selected documentation into sections or parts based on the inputs provided by the user;
- any autonomous and dynamic production of a printable report of the analysis carried out.

Optionally, the selection system according to the present invention is configured to generate, following the inputs provided by the user via the keyboard and the pointing device, the benchmark elements of the previously registered and validated documentation, comparing them with each other and presenting an analysis of such comparison.

Eventually, it is possible to generate a printed report, through a printing device operatively connected to the system, of the outcome of this comparison analysis.

The aforementioned system therefore allows to determine and identify the documentation best suited to the needs of a user within a multiplicity of documents previously analyzed and classified, objectively, according to the computer implemented method for the analysis and classification of documentation.

As mentioned, with respect to the prior art, the aforementioned method of analysis and classification allows to contextualize the content of the entire documentation analyzed, entrusting specific benchmark elements that take into account not only the content of the analyzed documentation but also any correlations (direct or through so-called exclusion clauses) within it.

In the foregoing, the preferred embodiments have been described and variants of the present invention have been suggested, but it is to be understood that those skilled in the art will be able to make modifications and changes without thereby departing from the relative scope of protection, as defined by the claims attached.

## Claims

1. Computer implemented method for the analysis and classification of documentation using a computer, provided with a screen, keyboard and pointing device, including the following steps:
- acquiring at least one digital image for each page composing said documentation by means of an optical acquisition device if said documentation is in paper format or acquire said documentation in said computer if said documentation is in digital format;
- encoding the digital content of said digital documentation with the aid of an OCR type technology;
- analyzing said codified documentation so as to identify and normalize discursive and numerical elements contained therein;
- analyzing said standardized elements of said documentation,
wherein during said analyzing step, said method further comprises:
- a phase of identifying, selecting and mutually contextualizing different contents of said digitized or digital documentation, distinguishing discursive parts and/or numerical parts, through models and IT functions,
- attributing to said different contents a programmable relational structure of benchmark elements,
- populating a database through said benchmark elements wherein the value of said benchmark elements is also a function of any correlation present between said normalized elements, **characterized in that** said analyzing said standardized elements of said documentation is based on a symbolic artificial intelligence system.

2. Computer implemented method according to claim 1, wherein said symbolic artificial intelligence is configured to simulate a human understanding of the text of the symbols and/or numbers comprised in said analyzed documentation.

3. Computer implemented method according to claim 1 or 2, wherein said step of attributing said benchmark elements comprises the steps of:
- searching through thesaurus for correspondences in said analyzed documentation,
- isolating portions of said documentation that have not been classified;
- manually classifying said portions of said documentation that have not been classified;
- training the recognition of said previously unclassified portions, so as to be able to recognize them in a subsequent analysis.

4. Computer implemented method according to any one of the preceding claims, wherein said step of populating said database comprises structuring said contents of said documentation on the basis of a hierarchical structure of said documentation with reference to paragraphs identified during said analysis of said documentation and linking said contents mutually to form the entire structure of said analyzed documentation.

5. Computer implemented method according to any one of the preceding claims, comprising a phase of teaching on the basis of machine learning techniques through which the ability to understand discursive and/or numerical contents of said documentation to be analyzed and classified is increased and refined.

6. A computer-implemented method according to claim 5, wherein said teaching step comprises a step of attributing to said benchmark elements a correlation such as to contextualize a possible connection between mutually connected parts of said digitized and analyzed documentation.

7. A computer-implemented method according to claim 5 or 6, wherein said teaching step is performed by at least one user interacting with said computer via said keyboard and said pointing device, wherein said user is an expert user of domain.

8. A computer-implemented method according to claim 7, wherein said teaching step comprises a step of verifying the presence of a normalized element of said documentation within said database and displaying a message through a display device operatively connected to said computer to request a user interacting with said computer to assign the location of said element within said database and to define its relations with said benchmark elements with respect to elements included in said database relating to said documentation.

9. Computer-implemented method according to one of claims 5 to 8, wherein said step of teaching said machine comprises teaching the meaning and semantics of each unrecognized word and its possible synonyms or a set of words in such a way that during a subsequent analysis of further documentation said computer recognizes and autonomously completes the assignment of the structure of said benchmark elements, populating said database containing a library of classified and possibly mutually connected data.

10. Computer implemented method according to claim 5, comprising a step of cataloging said normalized elements that make up said documentation, wherein said cataloging step occurs on the basis of said machine learning process through which said normalized elements and relative degrees of correlation of them, assigning respective benchmark elements.

11. Computer implemented method according to any one of the preceding claims, comprising populating said database with data structured in a relational way, wherein said database comprises a "genetic" type structure wherein each single benchmark element that composes said digitized and analyzed documentation, it is fragmented into small attributes that make up an object, wherein said attributes are then related to each other.

12. System for selecting documents analyzed and classified according to the computer implemented method for the analysis and classification of documentation according to one of claims 1 to 11, comprising one or more processing units, at least one screen, at least one keyboard, at least one pointing device and at least one database populated by said computer-implemented method according to one of claims 1 to 11, wherein said system is configured to provide specific documentation included in said database on the basis of inputs provided to said computer by said user through said keyboard and said pointing device.

## Patentansprüche

1. Computerimplementiertes Verfahren zur Analyse und Klassifizierung von Dokumentation mittels eines Computers, versehen mit einem Bildschirm, einer Tastatur und einem Zeigegerät, umfassend die folgenden Schritte:
- Erfassen von mindestens einem Digitalbild für jede Seite, die die genannte Dokumentation bildet, mittels eines optischen Erfassungsgeräts, falls die genannte Dokumentation in Papierformat vorliegt, oder Erfassen der genannten Dokumentation in dem genannten Computer, falls die genannte Dokumentation in digitalem Format vorliegt;
- Kodieren des digitalen Inhalts der genannten digitalen Dokumentation mit Hilfe einer OCR-Technologie;
- Analysieren der genannten kodifizierten Dokumentation, um darin enthaltene diskursive und numerische Elemente zu identifizieren und zu normalisieren;
- Analysieren der genannten normalisierten Elemente der genannten Dokumentation,
wobei während des genannten Analyseschrittes das genannte Verfahren ferner umfasst:
- eine Phase der Identifizierung, Auswahl und gegenseitigen Kontextualisierung verschiedener Inhalte der genannten digitalisierten oder digitalen Dokumentation, wobei diskursive Teile und/oder numerische Teile durch Modelle und **IT-Funktionen** unterschieden werden,
- Zuweisung zu den genannten verschiedenen Inhalten einer programmierbaren relationalen Struktur von Referenzelementen,
- Befüllen einer Datenbank mittels der genannten Referenzelemente, wobei der Wert der genannten Referenzelemente ebenfalls eine Funktion jeder vorhandenen Korrelation zwischen den genannten normalisierten Elementen ist,
**dadurch gekennzeichnet, dass** das genannte Analysieren der genannten normalisierten Elemente der genannten Dokumentation auf einem symbolischen System der künstlichen Intelligenz basiert.

2. Computerimplementiertes Verfahren nach Anspruch **1,** wobei die genannte symbolische künstliche Intelligenz so konfiguriert ist, dass sie ein menschliches Verständnis des Textes der in der genannten analysierten Dokumentation enthaltenen Symbole und/oder Zahlen simuliert.

3. Computerimplementiertes Verfahren nach Anspruch 1 oder 2, wobei der genannte Schritt der Zuweisung der genannten Referenzelemente die Schritte umfasst:
- Durchsuchen eines Thesaurus nach Entsprechungen in der genannten analysierten Dokumentation,
- Isolieren von Teilen der genannten Dokumentation, die nicht klassifiziert wurden;
- manuelles Klassifizieren der genannten Teile der genannten Dokumentation, die nicht klassifiziert wurden;
- Trainieren der Erkennung der genannten zuvor nicht klassifizierten Teile, um sie bei einer nachfolgenden Analyse erkennen zu können.

4. Computerimplementiertes Verfahren nach einem der vorhergehenden Ansprüche, wobei der genannte Schritt des Befüllens der genannten Datenbank das Strukturieren der genannten Inhalte der genannten Dokumentation auf Grundlage einer hierarchischen Struktur der genannten Dokumentation in Bezug auf während der genannten Analyse der genannten Dokumentation identifizierte Absätze und das gegenseitige Verknüpfen der genannten Inhalte zur Bildung der gesamten Struktur der genannten analysierten Dokumentation umfasst.

5. Computerimplementiertes Verfahren nach einem der vorhergehenden Ansprüche, umfassend eine Lernphase auf Grundlage von Techniken des maschinellen Lernens, durch welche die Fähigkeit, diskursive und/oder numerische Inhalte der genannten zu analysierenden und zu klassifizierenden Dokumentation zu verstehen, erhöht und verfeinert wird.

6. Computerimplementiertes Verfahren nach Anspruch 5, wobei der genannte Lernschritt einen Schritt umfasst, bei dem den genannten Referenzelementen eine Korrelation zugewiesen wird, um eine mögliche Verbindung zwischen gegenseitig verbundenen Teilen der genannten digitalisierten und analysierten Dokumentation zu kontextualisieren.

7. Computerimplementiertes Verfahren nach Anspruch 5 oder 6, wobei der genannte Lernschritt von mindestens einem Benutzer durchgeführt wird, der mit dem genannten Computer über die genannte Tastatur und das genannte Zeigegerät interagiert, wobei der genannte Benutzer ein fachkundiger Benutzer des Gebiets ist.

8. Computerimplementiertes Verfahren nach Anspruch 7, wobei der genannte Lernschritt einen Schritt umfasst, bei dem das Vorhandensein eines normalisierten Elements der genannten Dokumentation innerhalb der genannten Datenbank überprüft und eine Meldung über ein mit dem genannten Computer betrieblich verbundenes Anzeigegerät angezeigt wird, um einen mit dem genannten Computer interagierenden Benutzer aufzufordern, den Speicherort des genannten Elements innerhalb der genannten Datenbank zuzuweisen und seine Beziehungen mit den genannten Referenzelementen im Hinblick auf in der genannten Datenbank enthaltene, die genannte Dokumentation betreffende Elemente zu definieren.

9. Computerimplementiertes Verfahren nach einem der Ansprüche 5 bis 8, wobei der genannte Schritt des Lernens des genannten Computers das Lehren der Bedeutung und Semantik jedes nicht erkannten Wortes und seiner möglichen Synonyme oder einer Wortgruppe umfasst, derart, dass während einer nachfolgenden Analyse weiterer Dokumentation der genannte Computer die Zuweisung der Struktur der genannten Referenzelemente erkennt und autonom vervollständigt und die genannte Datenbank befüllt, die eine Bibliothek klassifizierter und möglicherweise miteinander verbundener Daten enthält.

10. Computerimplementiertes Verfahren nach Anspruch 5, umfassend einen Schritt des Katalogisierens der genannten normalisierten Elemente, die die genannte Dokumentation bilden, wobei der genannte Katalogisierungsschritt auf Grundlage des genannten Prozesses des maschinellen Lernens erfolgt, durch den die genannten normalisierten Elemente und ihre relativen Korrelationsgrade jeweiligen Referenzelementen zugewiesen werden.

11. Computerimplementiertes Verfahren nach einem der vorhergehenden Ansprüche, umfassend das Befüllen der genannten Datenbank mit relational strukturierten Daten, wobei die genannte Datenbank eine "genetische" Struktur umfasst, in der jedes einzelne Referenzelement, das die genannte digitalisierte und analysierte Dokumentation bildet, in kleine Attribute fragmentiert wird, die ein Objekt bilden, wobei die genannten Attribute anschließend miteinander in Beziehung gesetzt werden.

12. System zur Auswahl von Dokumenten, die gemäß dem computerimplementierten Verfahren zur Analyse und Klassifizierung von Dokumentation nach einem der Ansprüche 1 bis 11 analysiert und klassifiziert wurden, umfassend eine oder mehrere Verarbeitungseinheiten, mindestens einen Bildschirm, mindestens eine Tastatur, mindestens ein Zeigegerät und mindestens eine durch das genannte computerimplementierte Verfahren nach einem der Ansprüche 1 bis 11 befüllte Datenbank, wobei das genannte System so konfiguriert ist, dass es spezifische in der genannten Datenbank enthaltene Dokumentation auf Grundlage von durch den genannten Benutzer über die genannte Tastatur und das genannte Zeigegerät bereitgestellten Eingaben dem genannten Computer bereitstellt.

## Revendications

1. Procédé mis en œuvre par ordinateur pour l'analyse et la classification de documentation au moyen d'un ordinateur, pourvu d'un écran, d'un clavier et d'un dispositif de pointage, comprenant les étapes suivantes :
- acquérir au moins une image numérique pour chaque page composant ladite documentation au moyen d'un dispositif d'acquisition optique si ladite documentation est au format papier ou acquérir ladite documentation dans ledit ordinateur si ladite documentation est au format numérique ;
- coder le contenu numérique de ladite documentation numérique à l'aide d'une technologie de type OCR ;
- analyser ladite documentation codifiée de façon à identifier et normaliser les éléments discursifs et numériques qu'elle contient ;
- analyser lesdits éléments normalisés de ladite documentation,
dans lequel, pendant ladite étape d'analyse, ledit procédé comprend en outre :
- une phase d'identification, de sélection et de contextualisation mutuelle des différents contenus de ladite documentation numérisée ou numérique, distinguant des parties discursives et/ou des parties numériques, au moyen de modèles et de fonctions informatiques,
- l'attribution auxdits différents contenus d'une structure relationnelle programmable d'éléments de référence,
- l'alimentation d'une base de données au moyen desdits éléments de référence, dans laquelle la valeur desdits éléments de référence est également fonction de toute corrélation présente entre lesdits éléments normalisés,
**caractérisé en ce que** ladite analyse desdits éléments normalisés de ladite documentation est basée sur un système d'intelligence artificielle symbolique.

2. Procédé mis en œuvre par ordinateur selon la revendication 1, dans lequel ladite intelligence artificielle symbolique est configurée pour simuler une compréhension humaine du texte des symboles et/ou nombres contenus dans ladite documentation analysée.

3. Procédé mis en œuvre par ordinateur selon la revendication 1 ou 2, dans lequel ladite étape d'attribution desdits éléments de référence comprend les étapes consistant à :
- rechercher dans un thésaurus des correspondances dans ladite documentation analysée,
- isoler des parties de ladite documentation qui n'ont pas été classifiées ;
- classifier manuellement lesdites parties de ladite documentation qui n'ont pas été classifiées;
- entraîner la reconnaissance desdites parties précédemment non classifiées, de manière à pouvoir les reconnaître lors d'une analyse ultérieure.

4. Procédé mis en œuvre par ordinateur selon l'une quelconque des revendications précédentes, dans lequel ladite étape d'alimentation de ladite base de données comprend la structuration desdits contenus de ladite documentation sur la base d'une structure hiérarchique de ladite documentation en référence aux paragraphes identifiés lors de ladite analyse de ladite documentation et la liaison mutuelle desdits contenus pour former l'ensemble de la structure de ladite documentation analysée.

5. Procédé mis en œuvre par ordinateur selon l'une quelconque des revendications précédentes, comprenant une phase d'apprentissage sur la base de techniques d'apprentissage automatique, à travers laquelle la capacité de comprendre les contenus discursifs et/ou numériques de ladite documentation à analyser et classifier est augmentée et affinée.

6. Procédé mis en œuvre par ordinateur selon la revendication 5, dans lequel ladite étape d'apprentissage comprend une étape d'attribution auxdits éléments de référence d'une corrélation propre à contextualiser une possible connexion entre des parties mutuellement reliées de ladite documentation numérisée et analysée.

7. Procédé mis en œuvre par ordinateur selon la revendication 5 ou 6, dans lequel ladite étape d'apprentissage est réalisée par au moins un utilisateur interagissant avec ledit ordinateur par le biais dudit clavier et dudit dispositif de pointage, ledit utilisateur étant un utilisateur expert du domaine.

8. Procédé mis en œuvre par ordinateur selon la revendication 7, dans lequel ladite étape d'apprentissage comprend une étape de vérification de la présence d'un élément normalisé de ladite documentation dans ladite base de données et l'affichage d'un message par un dispositif d'affichage relié opérationnellement audit ordinateur pour demander à un utilisateur interagissant avec ledit ordinateur d'assigner l'emplacement dudit élément dans ladite base de données et de définir ses relations avec lesdits éléments de référence par rapport aux éléments compris dans ladite base de données relatifs à ladite documentation.

9. Procédé mis en œuvre par ordinateur selon l'une quelconque des revendications 5 à 8, dans lequel ladite étape d'apprentissage dudit ordinateur comprend l'apprentissage de la signification et de la sémantique de chaque mot non reconnu et de ses éventuels synonymes ou d'un ensemble de mots de manière que, lors d'une analyse ultérieure d'une documentation supplémentaire, ledit ordinateur reconnaisse et complète de manière autonome l'attribution de la structure desdits éléments de référence, en alimentant ladite base de données contenant une bibliothèque de données classifiées et éventuellement mutuellement reliées.

10. Procédé mis en œuvre par ordinateur selon la revendication 5, comprenant une étape de catalogage desdits éléments normalisés constituant ladite documentation, dans lequel ladite étape de catalogage s'effectue sur la base dudit processus d'apprentissage automatique à travers lequel lesdits éléments normalisés et leurs degrés relatifs de corrélation se voient attribuer des éléments de référence respectifs.

11. Procédé mis en œuvre par ordinateur selon l'une quelconque des revendications précédentes, comprenant l'alimentation de ladite base de données avec des données structurées de manière relationnelle, dans lequel ladite base de données comprend une structure de type « génétique » dans laquelle chaque élément unique de référence qui compose ladite documentation numérisée et analysée est fragmenté en petits attributs qui composent un objet, lesdits attributs étant ensuite reliés entre eux.

12. Système de sélection de documents analysés et classifiés selon le procédé mis en œuvre par ordinateur pour l'analyse et la classification de documentation selon l'une quelconque des revendications 1 à 11, comprenant une ou plusieurs unités de traitement, au moins un écran, au moins un clavier, au moins un dispositif de pointage et au moins une base de données alimentée par ledit procédé mis en œuvre par ordinateur selon l'une quelconque des revendications 1 à 11, dans lequel ledit système est configuré pour fournir une documentation spécifique incluse dans ladite base de données sur la base d'entrées fournies audit ordinateur par ledit utilisateur par le biais dudit clavier et dudit dispositif de pointage.
